**Europäisches Patentamt**

**European Patent Office**

**Office européen des brevets**

(19)

(11) Veröffentlichungsnummer : **0 355 871 B1**

(12) **EUROPÄISCHE PATENTSCHRIFT**

(45) Veröffentlichungstag der Patentschrift :
**13.05.92 Patentblatt 92/20**

(51) Int. Cl.⁵ : **F16D 41/06**

(21) Anmeldenummer : **89120251.7**

(22) Anmeldetag : **25.03.87**

(54) **Rollen- oder Klemmkörper-Freilauf-Baueinheit.**

(30) Priorität : **10.04.86 DE 3612046**

(43) Veröffentlichungstag der Anmeldung :
**28.02.90 Patentblatt 90/09**

(60) Veröffentlichungsnummer der früheren
Anmeldung nach Art. 76 EPü : **0 240 847**

(45) Bekanntmachung des Hinweises auf die
Patenterteilung :
**13.05.92 Patentblatt 92/20**

(84) Benannte Vertragsstaaten :
**DE FR GB SE**

(56) Entgegenhaltungen :
**DE-A- 3 333 130**
**DE-B- 1 132 390**
**FR-A- 2 112 652**
**US-E- 29 985**

(73) Patentinhaber : **FORD-WERKE**
**AKTIENGESELLSCHAFT**
**Werk Köln-Niehl Henry-Ford-Strasse Postfach**
**60 40 02**
**W-5000 Köln 60 (DE)**
(84) **DE SE**

Patentinhaber : **FORD MOTOR COMPANY**
**LIMITED**
**Eagle Way**
**Brentwood Essex (GB)**
(84) **GB**

Patentinhaber : **FORD FRANCE SOCIETE**
**ANONYME**
**344 Avenue Napoléon Bonaparte B.P. 307**
**F-92506 Rueil Malmaison Cedex (FR)**
(84) **FR**

(72) Erfinder : **Premiski, Vladimir**
**Fliederstrasse 23**
**W-5358 Bad Münstereifel-Willerscheid (DE)**
Erfinder : **Höhnel, Rainer**
**Hahnenstrasse 41**
**W-5024 Pulheim 3 (DE)**
Erfinder : **Premiski, Claudia**
**Fliederstrasse 23**
**W-5358 Bad Münstereifel-Willerscheid (DE)**

(74) Vertreter : **Messulam, Alec Moses et al**
**A. Messulam & Co. 24 Broadway**
**Leigh on Sea Essex SS9 1BN (GB)**

## Beschreibung

Die Erfindung bezieht sich auf eine Rollen- oder Klemmkörper-Freilauf-Baueinheit, der im Oberbegriff des Patentanspruches 1 erläuterten Art.

Aus der DE-C2-28 46 718 ist eine Rollen- oder Klemmkörper-Freilauf-Baueinheit der im Oberbegriff des Patentanspruches 1 erläuterten Art bekannt.

Die beiden miteinander zusammenwirkenden, inneren und äußeren Laufringe sind hierbei über seitlich von den Klemmrollen oder Klemmkörpern angeordnete Stützringe mit Gleitlagerfunktion konzentrisch zueinander abgestützt und gelagert.

Bei dieser bekannten Anordnung sind die Stützringe am Aussenlaufring drehfest angeordnet und gleiten am Innenlaufring bzw. auf der Welle. Die Verbindung ist als Preßsitz ausgebildet und schließt einen Käfig für die Rollen- oder Klemmkörper axial unverlierbar ein und bildet so eine vormontierbare Baueinheit, die einfach zu montieren ist. Der Innenlaufring ist hierbei beispielsweise von einem Teil einer Welle gebildet.

Bei dieser bekannten Anordnung umfaßt die vormontierbare Baueinheit den Außenlaufring mit und die Preßsitz-Verbindung ist in der Herstellung und Montage aufwendig.

Aus der DE-A1-33 33 130 ist eine weitere Rollen- oder Klemmkörper-Freilauf-Baueinheit ähnlich der im Oberbegriff des Patentanspruches 1 erläuterten Art bekannt.

Bei dieser Anordnung sind der Innenlaufring und der Aussenlaufring an Bauteilen eines Planetenradgetriebes ausgebildet und die beiden Bauteile sind über seitlich von den Klemmrollen angeordneten, ringscheibenförmigen Wangenteilen aus Kunststoff konzentrisch zueinander abgestützt.

Die ringscheibenförmigen Wangenteile bilden hierbei Teile eines Käfigs für die Rollen- oder Klemmkörper und sind miteinander eine vormontierbare Baueinheit bildend verrastet. Diese Baueinheit stellt gleichzeitig die Funktion eines Rollen- oder Klemmkörper-Freilaufs als auch die Funktion eines Gleitlagers bereit.

Diese bekannte vormontierbare Baueinheit umfaßt auch die Getriebebauteile mit, wodurch sie nicht allgemein anwendbar ist.

Die Aufgabe der Erfindung ist es, eine Rollen- oder Klemmkörper-Freilauf-Baueinheit der im Oberbegriff des Patentanspruches 1 erläuterten Art derart zu gestalten, daß ihre Montage durch Bildung einer vormontierbaren Einheit erleichtert wird.

Gemäß der Erfindung wird diese Aufgabe gelöst, indem eine Rollen- oder Klemmkörper-Freilauf-Baueinheit der im Oberbegriff des Patentanspruches 1 erläuterten Art die im Kennzeichenteil des Patentanspruches 1 aufgezeigten Merkmale aufweist.

In Anspruch 2 sind weitere Ausführungsmöglichkeiten der Erfindung aufgezeigt.

Dadurch, daß die Stützringe sich über die Eben von Schließringen hinauserstreckende Schenkel aufweisen, die durch nach innen abgebogene Bereiche verrastend an Bauteilen des Käfigs des Rollen- oder Klemmkörper-Freilaufes angreifen, wird eine vormontierbare Baueinheit gebildet, die eine einfache und zeitsparende automatische Montage durch Roboter ermöglicht und bei verschiedensten allgemeinen Getriebeausführungen anwendbar ist.

Die Erfindung wird anhand eines in der beiliegenden Zeichnung gezeigten Ausführungsbeispieles näher erläutert. Es zeigt:

Fig. 1 einen vertikalen Teilschnitt durch den Bereich eines Simpson-Satzes eines automatischen Getriebes mit einer Rollen- oder Klemmkörper-Freilauf-Baueinheit gemäß der Erfindung und

Fig. 2 einen vertikalen Radialschnitt durch die aus dem Käfig des Rollen- oder Klemmkörper-Freilaufs und den seitlichen Stützringen gebildete, vormontierbare Baueinheit.

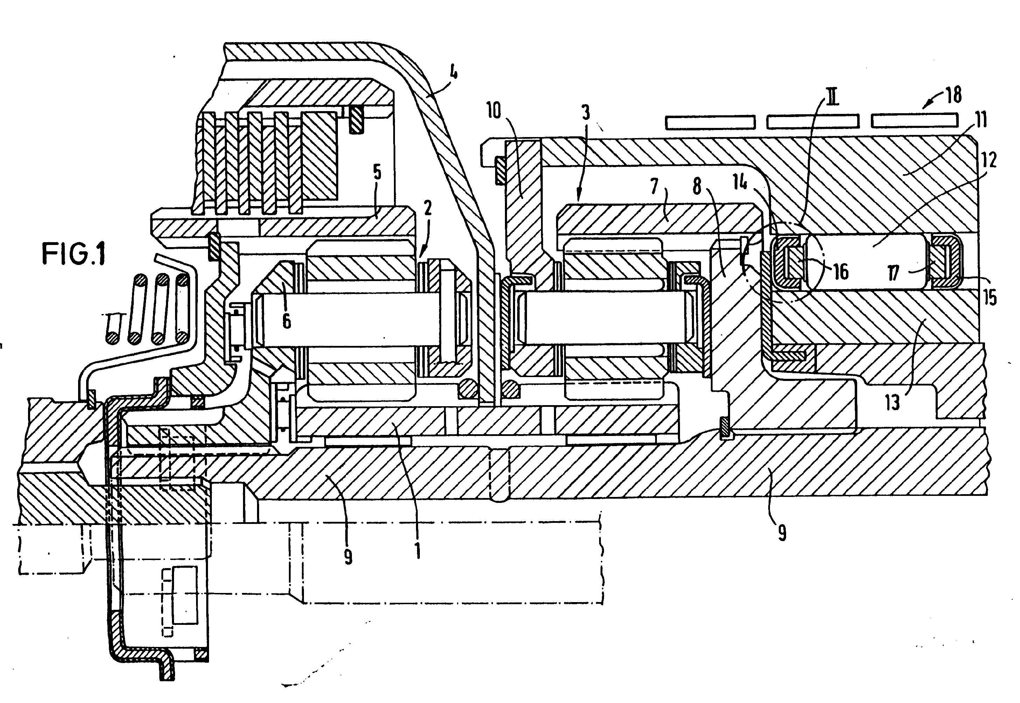

In Fig. 1 ist der in einem Automatik-Getriebe für Kraftfahrzeuge als Teil eines Planetenradgetriebes häufig verwendete Simpson-Satz gezeigt.

Ein solcher Simpson-Satz besteht aus zwei über ein gemeinsames Sonnenrad 1 miteinander gekoppelten Planetenradsätzen 2 und 3, wobei das Antriebsmoment einerseits über eine Antriebsglocke 4 von einer Vorwärtsgangkupplung (nicht gezeigt) oder über das Ringrad 5 des ersten Planetenradsatzes von einer Direktgangkupplung (nicht gezeigt) eingeleitet werden kann. Hierbei sind der Planetenradträger 6 des ersten Planetenradsatzes 2 sowie das Ringrad 7 des zweiten Planetenradsatzes 3 unmittelbar bzw. über ein Nabenteil 8 treibend mit der Abtriebswelle 9 des Getriebes verbunden.

Der Planetenradträger 10 des zweiten Planetenradsatzes 3 ist hierbei treibend mit einem trommelförmigen Bauteil 11 verbunden, das als ein einstückiges Fließpreßteil ausgebildet ist und das gleichzeitig den unlaufenden äußeren Laufring 11 eines Rollen- oder Klemmkörper-Freilaufes 12 bildet, dessen innerer Laufring 13 im Getriebegehäuse (nur angedeutet) festgelegt ist.

Das trommelförmige Bauteil 11 bildet hierbei unmittelbar die Bremstrommel für eine Bandbremse 18, mittels der der Planetenradträger 10 als Reaktionselement festlegbar ist.

Gemäß der Erfindung ist eine sichere konzentrische Abstützung und Lagerung des trommelförmigen Bauteiles 11 gegenüber dem inneren Laufring 13 durch seitlich des Rollen- oder Klemmkörper-Freilaufs 12 angeordnete Stützringe 14 und 15 sichergestellt, die einen C-förmigen Querschnitt aufweisen, der durch Schließringe 16 und 17 geschlossen wird.

Durch die bei 18 angedeutete Bremseinrichtung in Form einer Bandbremse kann der Planetenradträger 10 des zweiten Planetenradsatzes 3 gegen eine Drehung in beiden Richtungen festgelegt werden und hierdurch treten an den Stützringen 14 und 15 erhebliche Abstützkräfte auf.

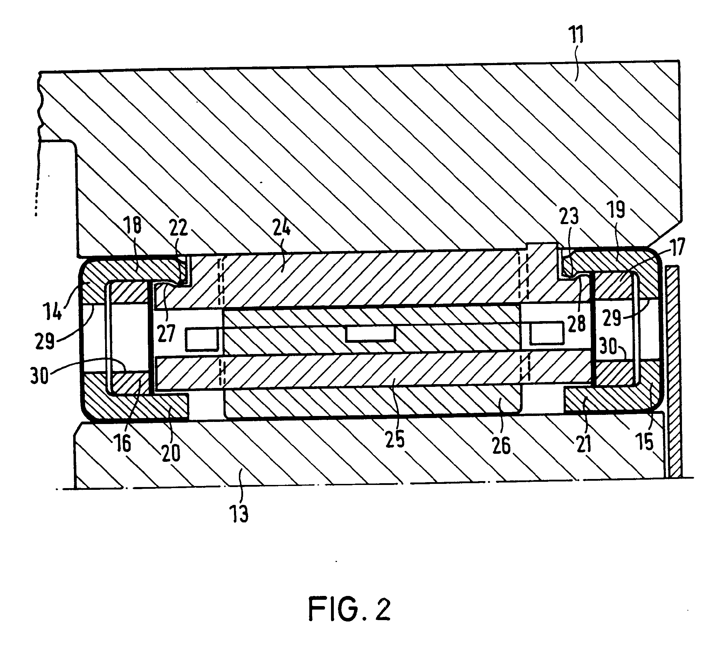

Die in Fig. 2 gezeite Rollen- oder Klemmkörper-Freilauf-Baueinheit besteht aus einem zwischen dem inneren Laufring 13 und dem äußeren Laufring 11 einführbaren Paket aus in einem Außenkäfig 24 und einem Innenkäfig 25 geführten Rollen- oder Klemmkörpern 26 und seitlich angeordneten Stützringen 14 und 15 mit C-förmigem Querschnitt, die über Schließringe 16 und 17 verschlossen sind.

Der Außenkäfig 24 weist seitlich abgesetzte Bereiche 27 und 28 auf, die mit abgebogenen Bereichen 22 und 23 an den sich axial über die Ebene der Schließringe 16 und 17 hinaus erstreckenden äußeren Schenkel 18 und 19 der Stützringe 14 und 15 verrastend zusammenwirken.

Der Innenkäfig 25 kann über die sich gleichfalls axial über die Ebene der Schließringe 16 und 17 hinaus erstreckenden inneren Schenkel 20 und 21 der Stützringe 14 und 15 in axialer Richtung geführt werden.

In ähnlicher Weise wie am Außenkäfig 24 kann eine Verrastung auch zwischen dem Innenkäfig 25 und den inneren Schenkeln der seitlichen Stützringe 14 und 15 vorgesehen werden.

Bei allen Ausführungen der Stützringe 14 und 15 und der Schließringe 16 und 17 sind in den vertikalen Wandungen am Umfang verteilt Bohrungen 29 und 30 vorgesehen, die für eine ausreichende Schmierölzufuhr ins Innere der Rollen- oder Klemmkörper-Freilauf-Baueinheit sorgen.

## Patentansprüche

1. Rollen- oder Klemmkörper-Freilauf-Baueinheit mit einem festgelegten Laufring (13) und einem umlaufenden Laufring (11)und mit zwischen den beiden Laufringen angeordneten Klemmrollen oder Klemmkörpern und seitlich davon angeordneten Stützringen (14,15) mit Gleitlagerfunktion und mit zumindest einem die Klemmrollen oder die Klemmkörper führenden Käfig,
**dadurch gekennzeichnet**, daß
– die Stützringe (14 und 15) sich über die Ebene von Schließringen (16 und 17) hinaus erstreckende Schenkel mit nach innen abgebogenen Bereichen (22 und 23) aufweisen, die mit am Käfig des Rollen- oder Klemmkörper-Freilaufs (12) abgesetzten Bereichen (27 und 28) verrastend zusammenwirken und eine vormontierbare Baueinheit bilden.

2. Rollen- oder Klemmkörper-Freilauf-Baueinheit nach Anspruch 1,
**dadurch gekennzeichnet**, daß
– die Stützringe (14 und 15) mit oberen und unteren sich über die Ebene der Schließringe (16 und 17) hinaus erstreckenden Schenkeln (18 und 19 bzw. 20 und 21) versehen sind, und daß die abgesetzten Bereiche an einem Außenkäfig (24) und/oder einem Innenkäfig (25) des Käfigs vorgesehen sind.

## Claims

1. Grip-roller or grip-element freewheel module with a fixed race (13) and a revolving race (11) and with grip rollers or grip elements arranged between the two races and bearing rings (14, 15) arranged to the side of the said elements and having the function of sliding bearings, and with at least one cage, which guides the grip rollers or grip elements,
characterised in that
– the bearing rings (14 and 15) have limbs extending beyond the plane of retaining rings (16 and 17) and having inward-bent regions (22 and 23), which interlock with offset regions (27 and 28) on the cage of the grip-roller or grip-element freewheel (12) and form a preassembleable module.

2. Grip-roller or grip-element freewheel module according to Claim 1,
characterised in that
– the bearing rings (14 and 15) are provided with upper and lower limbs (18, 19 and 20, 21 respectively) extending beyond the plane of the retaining rings (16 and 17) and in that the offset regions are provided on an outer cage (24) and/or an inner cage (25) of the cage.

## Revendications

1. Ensemble-roue libre à rouleaux ou éléments de blocage (coincement), comportant une bague de roulement (13) immobilisée et une bague de roulement (11) tournante, des rouleaux ou éléments de blocage placés entre les deux bagues de roulement, des anneaux d'appui (14, 15) placés à côté des rouleaux ou éléments de blocage et ayant une fonction de palier lisse, ainsi qu'au moins une cage guidant les rouleaux ou éléments de blocage,
caractérisé en ce que
– les anneaux d'appui (14 et 15) possèdent des branches s'étendant au-delà du plan d'anneaux de fermeture (16 et 17) et présentant des parties (22 et 23) recourbées vers l'intérieur qui coopèrent dans le sens d'un encliquetage mutuel avec des parties (27 et 28) de diamètre réduit de la cage de la roue libre (12) à rouleaux ou éléments de blocage, de manière à former un ensemble pouvant être préassemblé.

2. Ensemble-roue libre à rouleaux ou éléments de blocage selon la revendication 1,
caractérisé en ce que
– les anneaux d'appui (14 et 15) sont pourvus de branches supérieures et inférieures (18 et 19 ou 20 et 21) s'étendant au-delà du plan des anneaux de fermeture (16 et 17), et que les parties de diamètre réduit sont prévues sur une cage extérieure (24) et/ou une cage intérieure (25) de la cage.

FIG.1

EP 0 355 871 B1

FIG. 2